# EUROPEAN PATENT APPLICATION

(11) **EP 4 641 113 A1**
(43) Date of publication of application: **29.10.2025**
(21) Application number: 25172057.9
(22) Date of filing: 23.04.2025
(51) Int. Cl.: F25B 1/10, F25B 40/00, F25B 41/20, F25B 41/42, F25B 43/00, F25B 49/02, A23G 9/06, F25B 31/00

(54) **THERMODYNAMIC SYSTEM AND MACHINE COMPRISING SAID SYSTEM**

(30) Priority: 24.04.2024 IT 202400009490
(71) Applicant: Ali Group S.r.l. - Carpigiani, 20063 Cernusco sul Naviglio, Milano (IT)
(72) Inventor: LAZZARINI, ROBERTO, 42100 REGGIO EMILIA (IT); TASSI, FEDERICO, 40122 BOLOGNA (IT)
(74) Representative: Milli, Simone

(57) **Abstract**

A thermodynamic system 1 for cooling or heating at least a first container 11 containing food products of the liquid or semi-liquid type, comprising a circuit employing a heat exchanger fluid, preferably transcritical, having at least:
- a compressor 2 provided with a first inlet "I1" and a first outlet "U1" for the heat exchanger fluid and with a second inlet "I2" and a second outlet "U2" for said heat exchanger fluid;
- a first heat exchanger 4 comprising an inlet 4a for the heat exchanger fluid, connected to the second outlet "U2" of the compressor 2, and an outlet 4b for the heat exchanger fluid, the first heat exchanger 4 further comprising an inlet 4c for the service fluid and an outlet 4d for the service fluid;
- a second heat exchanger 5 associated with at least a first container 11;
- an inlet branch 35 for the heat exchanger fluid, extending from the outlet 4b for the heat exchanger fluid of the first heat exchanger 4 to an inlet 5a of the second heat exchanger 5;
- an outlet branch 36 for the heat exchanger fluid, extending from the outlet 5b of the second heat exchanger 5 to the first inlet "I1" of the compressor 2;
- a control and drive unit 8;

## Description

The present invention relates to the technical field of machines for preparing liquid or semi-liquid food products.

In particular, the present invention relates to a thermodynamic system and a machine for liquid or semi-liquid food products comprising the system of the invention.

In the industry of machines for liquid and semi-liquid products, such as those of ice cream, pastry, or similar industries, it is known to thermally process (i.e., cool and/or heat) a base product in order to put into practice a predetermined recipe and make a finished liquid or semi-liquid product. A plurality of heat systems of thermodynamic type, which allow thermally processing (heating or cooling) a product in a container to cause a modification of the food/organoleptic features thereof, are known.

Indeed, professional ice cream machines are characterized by the need to cool and batch freeze the ice cream mixture as well as to pasteurize it to ensure optimal hygienic conditions.

Therefore, the operating cycle of an ice cream machine includes different steps, a step of cooling and making ice cream and a pasteurizing step that includes heating, maintaining and cooling the ice cream.

Moreover, when the ice cream is cooled again upon pasteurization, it needs to be batch frozen.

Ice cream batch freezing is traditionally performed by the combined use of a vapor compression refrigeration cycle and mechanical stirring.

The pasteurization process is instead performed by injecting hot gas into the evaporator or by heat pump operation of a vapor compression cycle.

It is also known that most thermodynamic cooling systems allow cooling a container by means of a thermodynamic circuit operating on a heat exchanger fluid and comprise a pair of exchangers (evaporator and condenser), a compressor, and a throttling element, all employing the heat exchanger fluid.

Generally, such systems use an airtight or semi-airtight compressor consisting of a casing that encloses the compression elements acting on the refrigerating fluid and the electric motor therein.

Ice cream machines operate with a refrigeration cycle using a heat exchanger fluid as a refrigerant.

To date, F-gases are used as refrigerants, among which, for example, HFOs (HydroFluoroOlefins), fluorinated hydrocarbons forming the fourth generation of fluorinated cooling gases, are widely employed.

The ideal coolant should have certain features including ensuring high energy efficiency, allowing low system installation and maintenance costs, ensuring as little environmental impact as possible, not being toxic, and not being flammable.

The choice of technology and coolant should thus be well thought as a function of the market field, type of application, varied legislative context, installation and operating cost over time, and not least, future evolution in terms of product availability. Therefore, it is worth considering that some gases currently available at a low cost may increase significantly in price and/or be subject to allocation due to mechanisms imposed by the F-gas regulations.

As is easy to imagine, the topic of energy efficiency impacts the operating costs of the system but also has a non-negligible effect on environmental sustainability. Therefore, a switch from HFO refrigerants to natural refrigerants is underway.

One refrigerant defined as natural is CO2 which appears to be the optimal solution due to the reduced environmental impact thereof, even if the system design required is very expensive due to the high pressures involved. Therefore, CO2 is a feasible option only for new systems. Indeed, such a gas of natural origin has certain features suitable for the design and construction of refrigeration systems.

Such a gas is abundant in nature, is the waste product of several industrial processes, therefore has a very low cost, and has reduced environmental impact when compared to the most widespread refrigerants; indeed, the ozone layer reduction value (ODP) thereof is zero, while the contribution to global warming (GWP) is 1.

Finally, it is a non-toxic, non-flammable gas and has optimal thermodynamic and heat exchange properties.

The main drawback resulting from the use of CO2 in a system is the low critical temperature thereof and the high operating pressures characterizing the employment thereof.

Indeed, the refrigeration cycle of a machine with a traditional fluid is a vapor compression cycle between 1.3 and 1.7 bar, while the cycle used by a CO2 machine operates at between 15 and 90 bar, therefore, the use thereof requires a specific conception of the system.

In this context, it is the technical task underlying the present invention to suggest a thermodynamic CO2 system which overcomes the above drawbacks.

In particular, it is the object of the present invention to provide a thermodynamic system capable of allowing a heat treatment of a liquid or semi-liquid food product and ensuring an operation thereof under optimal conditions.

Therefore, it is a further object of the present invention to provide a thermodynamic system which allows improving the efficiency in the heating cycle.

It is a further object of the present invention to provide a thermodynamic system which allows keeping a sufficiently high pressure and temperature of the heat exchanger fluid while managing the heating step with increased efficiency.

The present invention also relates to a machine for making liquid or semi-liquid food products.

The technical task and the specified objects are substantially achieved by a thermodynamic system and a machine comprising the technical features set forth in one or more of the appended claims.

Further features and advantages of the present invention will become more apparent from the following indicative and thus non-limiting description of some preferred, but not exclusive, embodiments of a thermodynamic system, as shown in the accompanying drawings, in which:
- Figure 1 shows a diagram of a possible first embodiment for a thermodynamic system according to the present invention;
- Figure 2 shows a diagram of a possible second embodiment for a thermodynamic system according to the present invention;

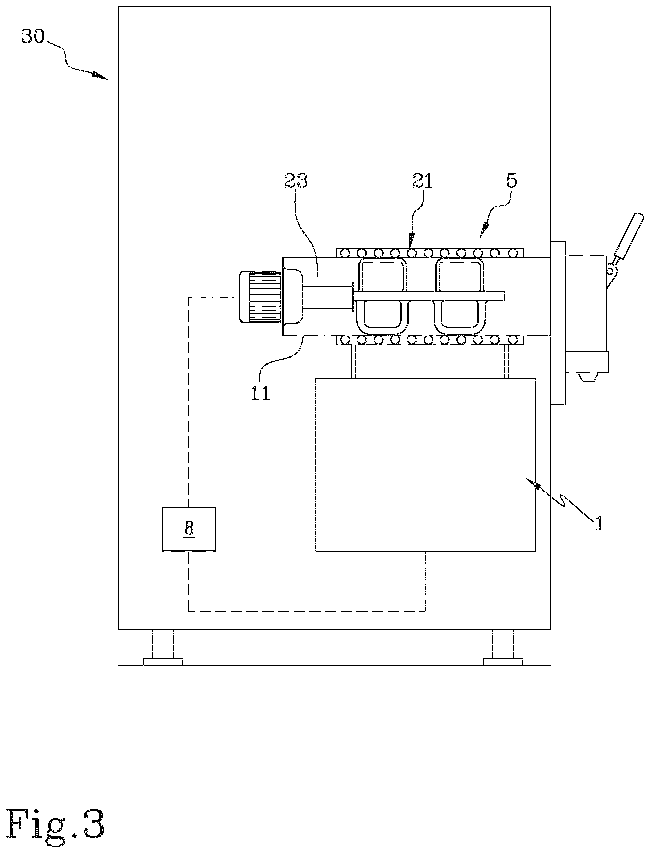

- Figure 3 shows a diagrammatic view of a machine for liquid or semi-liquid products, comprising the thermodynamic system shown in the previous figures;
- Figure 4 shows a quantitative trend of the temperature values reached by the mixture during the pasteurization step;
- Figure 5 shows a quantitative trend of the pressure values reached in the different positions of the system during the pasteurization step.

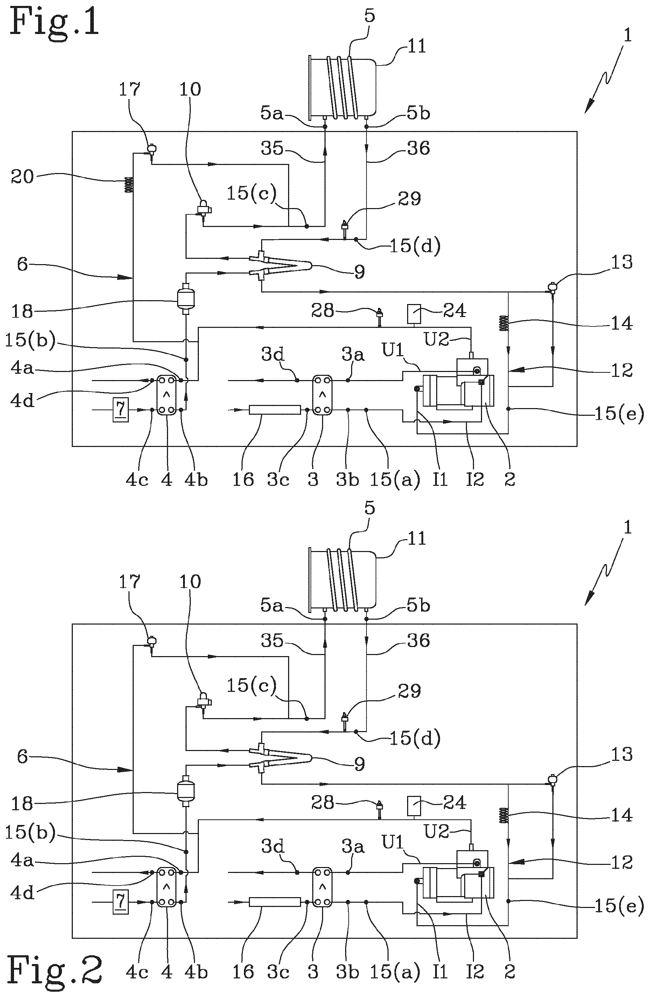

A thermodynamic system according to the present invention is indicated by numeral 1 in Figures 1-2, which for simplicity of description will be indicated below as the system 1.

Such a system 1 is applicable to a machine 30 for thermally processing liquid or semi-liquid, hot or cold food products such as ice cream, soft ice cream, yogurt, chocolate, sorbets, soups, and other similar products, for example.

In particular, the present invention relates to a system 1 for cooling or heating at least a first container 11 containing food products of the liquid or semi-liquid type.

According to the invention, the system 1 for cooling or heating at least a first container 11 containing food products of the liquid or semi-liquid type comprises a circuit employing a heat exchanger fluid. Preferably, the circuit employs a heat exchanger fluid of the transcritical type.

System 1 has at least:
- a compressor 2 provided with a first inlet "I1" and a first outlet "U1" for the heat exchanger fluid and with a second inlet "I2" and a second outlet "U2" for the heat exchanger fluid;
- a first heat exchanger 4 comprising an inlet 4a for the heat exchanger fluid and an outlet 4b for the heat exchanger fluid.
   The heat exchanger 4 is connected to the second outlet "U2" of compressor 2 and is configured to allow a heat exchange between the heat exchanger fluid exiting from the second outlet "U2" of compressor 2, and a service fluid, preferably water (or alternatively air or in any case any heat exchanger service fluid).
   The first heat exchanger 4 further comprises an inlet 4c for the service fluid and an outlet 4d for the service fluid;
- a second heat exchanger 5 associated with at least a first container 11;
- an inlet branch 35 for the heat exchanger fluid, such an inlet branch 35 extending from outlet 4b for the heat exchanger fluid of the first heat exchanger 4 to an inlet 5a of the second heat exchanger 5;
- an outlet branch 36 for the heat exchanger fluid, such an outlet branch 36 extending from an outlet 5b of the second heat exchanger 5 to the first inlet "I1" of compressor 2;
- a control and drive unit 8.

Note that the first container 11 can be of any type, such as a cylinder, a tank, etc.

According to an aspect of the invention, system 1 also comprises:
- a first pressure transducer 28 configured to generate pressure signal representing the pressure of the heat exchanger fluid flowing between the second outlet "U2" of compressor 2 and the inlet 4a of the first heat exchanger 4;
- regulating means 7 for regulating the flow rate of the service fluid flowing at the inlet 4c to the first heat exchanger 4. Moreover, the regulating means 7 are operatively activable via the control and drive unit 8 as a function of the pressure data obtained from the first pressure transducer 28.

The pressure switch 24 acts as a safety element which interrupts the operation of compressor 2 if the pressure (detected, for example, by the pressure transducer 28) exceeds a predefined deactivation value (e.g., a value between 120 and 140 bar, more preferably between 125 and 135 bar).

The control unit 8 is configured to activate the compressor 2 if the pressure (detected, for example, by the pressure transducer 28) falls below a predefined activation value (e.g., a value between 90 and 110 bar, more preferably between 95 and 105 bar).

According to a further aspect of the invention, system 1 includes a bypass branch 12 and a bypass valve 13.

The bypass branch 12 is arranged parallel to the bypass valve 13, positioned along the outlet branch 36 downstream of the second heat exchanger 5, so that when the bypass valve 13 is inactive, the heat exchanger fluid enters the bypass branch 12.

The bypass branch 12 has a second element 14 for reducing the pressure configured to convey the heat exchanger fluid at the outlet 5b of the second heat exchanger 5 directly towards the first inlet I1 of compressor 2 having reduced the pressure thereof.

The regulating means 7 for regulating the flow rate of the service fluid entering the heat exchanger 4 comprise a valve (preferably electronic or alternatively mechanical).

Note that such a valve is a proportional valve (i.e., having a plurality of regulating positions, thus allowing different apertures to be obtained). Moreover, when active, the regulating means 7 for regulating the flow rate of the service fluid entering the first heat exchanger 4 allow the service fluid to flow in the first heat exchanger 4 itself, through inlet 4c.

In other words, the first heat exchanger 4 is fed by the service fluid flowing through of the regulating means 7, which serve the function of proportionally regulating the flow of the service fluid to maintain a constant pressure in the cooling step by means of a PID control through the reading of the first pressure transducer 28.

Therefore, note that the first pressure transducer 28 is configured to generate pressure data representing the pressure drop between two points of the system, in particular, between the second outlet "U2" of compressor 2 and the inlet 4a for the heat exchanger fluid of the first heat exchanger 4.

Moreover, system 1 also comprises a thermostatic valve 10 arranged along the inlet branch 35 downstream of the first heat exchanger 4 with respect to a flow direction of the heat exchanger fluid in the inlet branch 35.

The thermostatic valve 10 could be of the electronic type or alternatively of the mechanical type.

The thermostatic valve 10 is operatively activable, by means of the control and drive unit 8, to regulate a load loss of the heat exchanger fluid so as to control the evaporation pressure in the second heat exchanger 5, in use defining an evaporator.

In other words, when activated, the thermostatic valve 10 allows the heat exchanger fluid to flow towards the second heat exchanger 5, flowing through the inlet 5a thereof.

For the purposes of the present description, also note that the term activating or deactivating a valve means that the control and drive unit 8 is considered to act on the valve so as to promote an opening or closing thereof.

According to an aspect, system 1 also comprises first monitoring means 15c for monitoring the temperature of the heat exchanger fluid flowing in the inlet branch 35.

The first monitoring means 15c are arranged upstream of the inlet 5a of the second heat exchanger 5 with respect to a flow direction of the heat exchanger fluid in the inlet branch 35.

The first monitoring means 15c are configured to provide temperature data of the heat exchanger fluid in the inlet branch 35, in particular in a position between the thermostatic valve 10 and the inlet 5a of the second heat exchanger 5.

According to an aspect, system 1 also comprises second monitoring means 15d for monitoring the temperature of the heat exchanger fluid flowing in the outlet branch 36.

The second monitoring means 15d are arranged downstream of the outlet 5b of the second heat exchanger 5, with respect to a flow direction of the heat exchanger fluid in the outlet branch 36; the second monitoring means 15d are configured to provide temperature data of the heat exchanger fluid downstream of the second heat exchanger 5.

According to another aspect, system 1 also comprises a second pressure transducer 29 arranged along the outlet branch 36, downstream of the second monitoring means 15d, configured to provide pressure data of the heat exchanger fluid downstream of the second heat exchanger 5.

The regulation of thermostatic valve 10 is carried out as a function of the temperature data of the first 15c and second 15d monitoring means and to the pressure data of the second pressure transducer 29, thus assessing the temperature gradient and the corresponding pressure upstream and downstream of the heat exchanger 5.

Moreover, according to an embodiment, system 1 further comprises:
- a temperature sensor 15e configured to provide the control and drive unit 8 with temperature data representing the temperature of the heat exchanger fluid entering the first inlet "I1" of compressor 2;
- a temperature sensor 15a configured to provide the same control and drive unit 8 with a temperature data representing the temperature of the heat exchanger fluid entering the second inlet "I2" of compressor 2.

According to another aspect of the present invention, system 1 further comprises a third heat exchanger 3 connected to the first outlet "U1" and to the second inlet "I2" of compressor 2.

The third heat exchanger 3 is configured to allow a heat exchange between the heat exchanger fluid and a service fluid, preferably water. The heat exchanger 3 comprises an inlet 3c for the service fluid and an outlet 3d for the service fluid.

Note that in order to regulate the flow rate of the service fluid entering the third heat exchanger 3 via inlet 3c, there is an electrovalve 16 which is activable by the control and drive unit 8 regulated by the data outputted from the temperature sensor 15a.

According to another aspect, the system comprises the bypass valve 13 which is operatively activable, by means of the control and drive unit 8, to allow the heat exchanger fluid to flow towards the first inlet "I1" of compressor 2.

The bypass valve 13 is arranged along the outlet branch 36 downstream of the second heat exchanger 5 with respect to a flow direction of the heat exchanger fluid in the outlet branch 36.

The bypass valve 13 is arranged parallel to the bypass branch 12 so that when the bypass valve 13 is inactive, the heat exchanger fluid flows into the bypass branch 12, having a second pressure reducing element 14 operatively associated with the bypass branch 12.

The second pressure reducing element 14 serves to reduce the pressure of the heat exchanger fluid entering the first inlet "I1" of compressor 2 while keeping high the pressure of the heat exchanger fluid flowing through the second outlet "U2" of compressor 2, since it is a CO2 system and thus operating on high pressure values.

Preferably, the bypass valve 13 is controlled to close the bypass branch 12 completely or to open it completely, inhibiting or allowing the circulation of the heat exchanger fluid inside the bypass branch 12 and therefore the consequent flow in the second pressure reducing element 14.

In other words, in order to reduce the pressure of the heat exchanger fluid entering the first inlet "I1" of compressor 2, the bypass valve 13 is closed, conveying the entire flow rate into the second pressure reducing element 14 which thus creates a jump in pressure and temperature.

Note that the cooling of the heat exchanger fluid occurs due to the jump in pressure generated by the second pressure reducing element 14.

Moreover, the temperature of the heat exchanger fluid entering the inlet "I1" of compressor 2 is constantly monitored by the temperature sensor 15e to keep a sufficient overheating so as not to fall in the saturated vapors curve.

In order to have the necessary overheating, the bypass valve 13 is activated intermittently to modify the pressure jump when there is a need to increase the overheating.

In other words, the temperature of the heat exchanger fluid entering the first inlet "I1" of compressor 2 is reduced by flowing through the second temperature reducing element 14, and is constantly monitored by the temperature sensor 15e.

Therefore, it is apparent that due to the innovation of the bypass branch 12, the temperature of the components of compressor 2 always remains low, even when a hot gas cycle is used.

Advantageously, when the bypass valve 13 is inactive, the bypass branch 12 is configured to draw the heat exchanger fluid in the outlet branch 36 from the second heat exchanger 5 and convey it to the first inlet "I1" of compressor 2 after performing a corresponding pressure/temperature reduction thereon.

Due to its relatively low temperature, the heat exchanger fluid, at the inlet of compressor 2, draws thermal energy from the hottest components of compressor 2, causing a reduction of the temperature of compressor 2, i.e., a cooling thereof, thus reducing the thermal stress to which compressor 2 is subjected.

According to a further aspect of the present invention, system 1 comprises a hot gas branch 6 for implementing a hot gas thermodynamic cycle.

The hot gas branch 6 is configured to convey the heat exchanger fluid from the second outlet "U2" of compressor 2 towards the inlet 5a of the second heat exchanger 5.

According to a depiction of system 1 depicted in Figure 1, there are at least one selective closing element 17 and a first pressure reducing element 20 in the hot gas branch 6.

The selective closing element 17 is operatively associated with the hot gas branch 6 and configured to close and open such a hot gas branch 6 so as to inhibit or allow the heat exchanger fluid to circulate therein.

The first pressure reducing element 20 always operatively associated with the hot gas branch 6 is located upstream of the selective closing element 17 with respect to a flow direction of the heat exchanger fluid in the inlet branch 35.

Further aspects and details of system 1 will now be described.

In particular, note that the outlet branch 36 has, along the path thereof, a regenerative heat exchanger 9 configured to define a heat exchanging portion between the heat exchanger fluid flowing along the inlet branch 35 and the heat exchanger fluid flowing along the outlet branch 36. According to a preferred embodiment, system 1 further comprises a dehydrating filter 18 which allows the cleaning of the heat exchanger fluid to be ensured, promoting the removal of any impurities accumulated by the fluid during the cooling or heating cycles, in particular when crossing compressor 2.

As shown in detail in accompanying Figure 1, the dehydrating filter 18 is arranged along the inlet branch 35, interposed between the outlet 4b for the heat exchanger fluid of the first heat exchanger 4 and the inlet 5a of the second heat exchanger 5.

In practice, the system 1 in Figure 1 can switch between a heating configuration, in which a thermodynamic heating cycle of the first container 11 is implemented, and a cooling configuration, in which a thermodynamic cooling cycle of the first container 11 is implemented.

Therefore, an implementation for reducing the temperature of the heat exchanger fluid in Figure 1 will now be described, which could also be implemented individually in system 1.

In the first stage of cooling configuration, the heat exchanger fluid is cooled employing a service fluid, preferably water, entering the compressor 2 through the heat exchanger 3 serving the function of cooling the service fluid before being processed in the second compression stage. The flow rate of the service fluid entering the inlet 3c of the heat exchanger 3 is regulated by electrovalve 16 as a function of the temperature of the service fluid flowing through the outlet 3b of compressor 2 and detected by the temperature sensor 15a.

Preferably, the flow rate at the inlet 3c of the heat exchanger 3 is regulated by the electrovalve 16 in an intermittent manner; in brief, electrovalve 16 is activated upon reaching a predetermined temperature (e.g., 35°C) detected by the temperature sensor 15a.

According to another aspect, the electrovalve 16 is deactivated when the temperature detected by the temperature sensor 15a is below a predetermined hysteresis value (e.g., 0.5°C) with respect to the above-mentioned predetermined temperature.

After this first step, the heat exchanger fluid is processed by the second compression stage.

The heat exchanger fluid is conveyed through the second outlet "U2" of compressor 2 into the heat exchanger 4 flowing through the inlet 4a thereof.

The heat exchanger 4 further cools the heat exchanger fluid by means of a service fluid, preferably water, entering the heat exchanger 4 through the inlet 4c.

The flow rate of the service fluid flowing into the inlet 4c of the heat exchanger is regulated by the regulating means 7 comprising an electronic valve.

The regulating means 7 for regulating the flow rate of the service fluid entering the heat exchanger 4 in this step are active to allow the service fluid to flow in the heat exchanger 4 itself.

In other words, the flow rate of the service fluid is regulated by the regulating means 7 as a function of the pressure data generated by the first pressure transducer 28, representing the pressure of the heat exchanger fluid flowing between the second outlet "U2" of compressor 2 and the inlet 4a for the heat exchanger fluid in the heat exchanger 4.

The heat exchanger fluid flowing through the outlet "U2" of compressor 2, thus exiting from the second stage of compressor 2, is completely conveyed into the heat exchanger 4 since the selective closing element 17 is closed to inhibit the heat exchanger fluid circulation inside the hot gas branch 6.

The heat exchanger fluid flowing through the outlet 4b of the heat exchanger 4, travelling along the inlet branch 35, crosses the dehydrating filter 18 and the regenerative heat exchanger 9, the latter serving the function of further cooling it.

After that, the same heat exchanger fluid reaches the thermostatic valve 10 which is active to allow the heat exchanger fluid to flow towards the inlet 5a of the heat exchanger 5.

The thermostatic valve 10 is regulated by increasing or reducing the load loss to maintain a specific evaporation pressure, as a function of the temperature at the inlet 5a and outlet 5b of the heat exchanger 5 monitored by the first and second temperature monitoring means 15c, 15d and as a function of the pressure monitored by the second pressure transducer 29.

The heat exchanger fluid on the outlet branch 36, thus flowing from the outlet 5b from the evaporator, crosses the regenerative heat exchanger 9 again, crosses the bypass valve 13 which is active to allow the heat exchanger fluid to flow towards the first inlet "I1" of compressor 2.

In other words, after crossing the bypass valve 13, the heat exchanger fluid reaches the inlet "I1" of the first stage of compressor 2, before inlet "I1" there is the temperature sensor 15e, which is configured to provide the control and drive unit 8 with temperature data of the heat exchanger fluid entering the first inlet "I1" of compressor 2.

By contrast, an embodiment for raising the temperature of the heat exchanger fluid present in Figure 1, which also could be implemented individually in system 1, is described below.

System 1 indeed allows increasing the temperature and pressure of the heat exchanger fluid as described below.

In the initial heating step, it is necessary to heat the heat exchanger 4 to ensure that the service fluid accumulated in this heat exchanger 4 remains at a sufficiently high temperature to allow raising the pressure of system 1 without it remaining cold and inert.

To this end, it is necessary to perform a short switching step in which the thermostatic valve 10 is completely opened to allow the heat exchanger fluid to flow towards the heat exchanger 5, while the selective closing element 17 is still closed to inhibit the heat exchanger fluid from circulating in the hot gas branch 6.

In these instants, the regulating means 7 for regulating the flow rate of the service fluid are inactive to inhibit the service fluid from flowing in the heat exchanger 4. It should also be noted that the temperature outputted from the heat exchanger 4 is monitored by the temperature monitoring means 15b.

The thermostatic valve 10 can then be completely closed while the selective closing element 17 is opened, conveying the heat exchanger fluid flowing from the second outlet "U2" of compressor 2 into the heat exchanger 5.

Note that in the initial heating step, the heat exchanger fluid is brought to the transcritical stage before starting the next step.

In other words, during the heating step, the at least one selective closing element 17, located on the hot gas branch 6, is opened to allow the heat exchanger fluid to circulate in the hot gas branch 6, and the regulating means 7 for regulating the flow rate of the service fluid entering the inlet 4c of the first heat exchanger 4 are inactive to inhibit said service fluid from flowing in the heat exchanger 4.

Indeed, the flowing of new service fluid in the regulating means 7, and therefore in the heat exchanger 4, would cause a decrease in temperature of the heat exchanger fluid.

The hot gas branch 6 must be calibrated so as to have a reduction in pressure by the pressure reducing element 20 such as to allow the desired increase in temperature on the compression circuit of the second stage (i.e., on the circuit originating from the second outlet "U2" of compressor 2).

The bypass valve 13 is closed in order to reduce the temperature of the heat exchanger fluid flowing through the inlet "I1" of compressor 2, therefore entering the first stage of compressor 2, and to further increase the resulting temperature and pressure on the second outlet "U2" of compressor 2, thus exiting the second stage of compressor 2.

Therefore, the entire flow rate of the outlet branch 36 is conveyed into the bypass branch 12, and more particularly into the second pressure reducing element 14 on the bypass branch 12, which creates a jump in pressure and temperature.

The resulting temperature of the heat exchanger fluid at the first inlet "I1" of compressor 2 is thus reduced and is constantly monitored by the temperature sensor 15e.

In other words, the bypass valve 13 is inactive so that said heat exchanger fluid flows towards the first inlet "I1" of compressor 2, flowing through the bypass branch 12.

The bypass branch 12 is equipped with the pressure reducing element 14. As mentioned above, since CO2 systems are characterized by a high operating pressure, before the heat exchanger fluid re-enters the first inlet "I1" of compressor 2, the pressure and temperature thereof must be decreased.

Therefore, branch 12 and element 14 are used to manage the heating step with high efficiency, limiting the pressure values found in the first inlet "i1" of compressor 2.

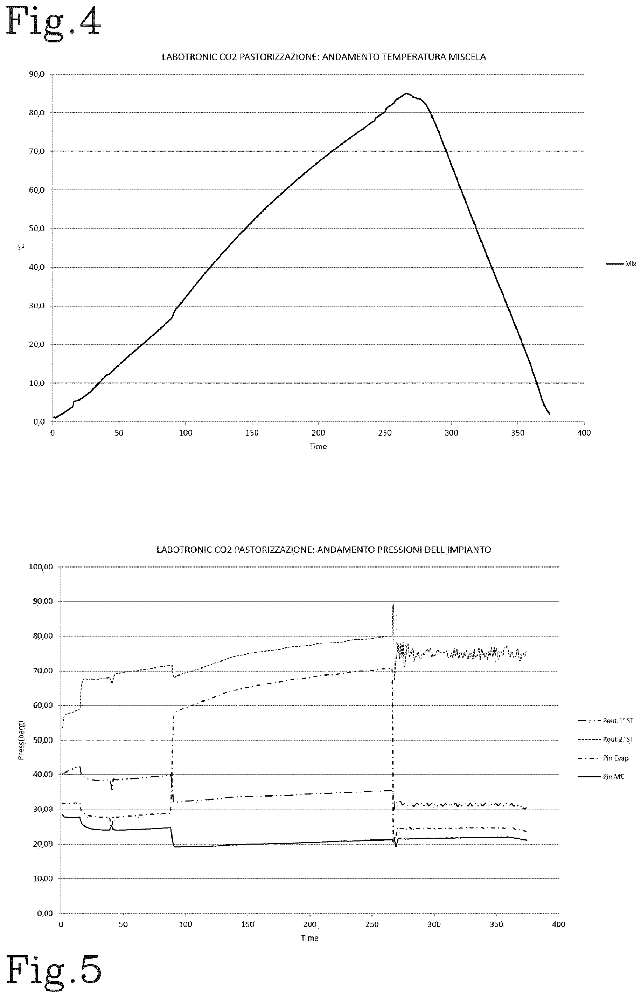

Indeed, analyzing the graph in Figure 5 in which the trends of the pressure values during pasteurization, i.e., the heating step, in different points of system 1 are depicted, it is apparent how the pressure values of the heat exchanger fluid close to the first inlet "I1" of compressor 2 are less than the pressure values of the heat exchanger fluid close to the second outlet "U2" of compressor 2.

In addition, the graph in accompanying Figure 4 depicts the temperature trend of the ice cream mixture contained in the first container 11 during the pasteurization step, i.e., that step in which it is brought to a temperature close to 100°C to ensure optimal hygienic conditions.

According to the invention, a machine 30 for making liquid or semi-liquid food products is also defined, comprising, in combination:
- a processing unit 21 for making a liquid or semi-liquid food product, comprising at least one container 11 and a stirrer 23 arranged inside the at least a first container 11 to rotate inside the first container 11;
- a system 1 operatively associated with the processing unit 21,
- a second heat exchanger 5 associated with at least a first container 11 for exchanging heat with the product contained in at least a first container 11.

According to another aspect, the machine is an ice cream machine and the processing unit 21 is a batch freezing unit; moreover, the machine 30 is a pasteurizer and the processing unit 21 is a heating and/or cooling unit.

It should be noted that according to the invention, the thermodynamic system could be applied to any type of machine capable of thermally processing liquid or semi-liquid products.

Advantageously, the system 1 according to the present invention allows overcoming the above-mentioned defects of the prior art. Advantageously, there is provided a system 1 capable of allowing a heat treatment of a liquid or semi-liquid food product and ensuring the operation thereof under optimal conditions.

Advantageously, there is provided a system 1 which allows improving the efficiency in the heating cycle.

Advantageously, there is provided a system 1 which allows maintaining sufficiently high pressure and temperature of the heat exchanger fluid while managing the heating step with high efficiency.

## Claims

1. A thermodynamic system (1) for cooling or heating at least a first container (11) containing food products of the liquid or semi-liquid type, comprising a circuit employing a heat exchanger fluid, preferably transcritical, having at least:
- a compressor (2) provided with a first inlet (11) and a first outlet (U1) for the heat exchanger fluid and with a second inlet (I2) and a second outlet (U2) for said heat exchanger fluid;
- a first heat exchanger (4) comprising an inlet (4a) for the heat exchanger fluid, connected to the second outlet (U2) of the compressor (2), and an outlet (4b) for said heat exchanger fluid, said heat exchanger (4) being configured to allow heat exchange between said heat exchanger fluid and a service fluid, said first heat exchanger (4) also comprising an inlet (4c) for said service fluid and an outlet (4d) for the service fluid;
- a second heat exchanger (5) associated with said at least one first container (11);
- an inlet branch (35) for said heat exchanger fluid, extending from the outlet (4b) for the heat exchanger fluid of said first heat exchanger (4) to an inlet (5a) of said second heat exchanger (5);
- an outlet branch (36) for said heat exchanger fluid, extending from an outlet (5b) of said second heat exchanger (5) to the first inlet (11) of said compressor (2);
- a control and drive unit (8);
**characterized in that** it comprises a bypass branch (12) and a bypass valve (13), the bypass branch (12) is disposed parallel to said bypass valve (13), positioned along the outlet branch (36) downstream of the second heat exchanger (5), so that when the bypass valve (13) is inactive, the heat exchanger fluid flows into said bypass branch (12), which has a second pressure reducing element (14) which is operatively associated with the bypass branch (12), said bypass branch (12) being configured to convey the heat exchanger fluid flowing out from the outlet (5b) of the second heat exchanger (5) directly to the first inlet (11) of the compressor (2).

2. The thermodynamic system (1) according to claim 1, wherein said bypass valve (13) is operatively activable via the control and drive unit (8) to allow the heat exchanger fluid to flow towards the first inlet (11) of the compressor (2).

3. The thermodynamic system (1) according to claim 1 or 2, wherein said service fluid entering the inlet (4c) of said first heat exchanger (4) is water, the flow rate of said service fluid entering the inlet (4c) of said first heat exchanger (4) being regulated by regulating means (7) which are operatively activable via the control and drive unit (8).

4. The thermodynamic system (1) according to one or more of the preceding claims, comprising an electronic thermostatic valve (10) located downstream of the first heat exchanger (4) along the inlet branch (35) relative to a flow direction of the heat exchanger fluid in the inlet branch (35), said electronic thermostatic valve (10) being operatively activable, via said control and drive unit (8), to regulate a load loss of the heat exchanger fluid so as to regulate a predetermined evaporation pressure in said second heat exchanger (5).

5. The thermodynamic system (1) according to one or more of the preceding claims, comprising:
- first monitoring means (15c) for monitoring the temperature of the heat exchanger fluid flowing in said inlet branch (35), said first monitoring means (15c) being located upstream of the inlet (5a) of the second heat exchanger (5) relative to a flow direction of the heat exchanger fluid in the inlet branch (35), the first monitoring means (15c) being configured to provide a heat exchanger fluid temperature data signal;
- second monitoring means (15d) for monitoring the temperature of the heat exchanger fluid flowing in said outlet branch (36), said second monitoring means (15d) being located downstream of the outlet (5b) of the second heat exchanger (5) relative to a flow direction of the heat exchanger fluid in the outlet branch (36), the second monitoring means (15d) being configured to provide a heat exchanger fluid temperature data signal;

6. The thermodynamic system (1) according to any one of the preceding claims, comprising:
- a first pressure transducer (28), configured to generate a pressure data signal representing the pressure of the heat exchanger fluid flowing between the second outlet (U2) of said compressor (2) and said inlet (4a) of the heat exchanger fluid of the first heat exchanger (4), said pressure transducer (28) regulating the flow rate of the service fluid entering the heat exchanger (4) by way of said regulating means (7);
- a second pressure transducer (29) located along the outlet branch (36) downstream of said second monitoring means (15d) and configured to provide a heat exchanger fluid pressure data signal;
wherein said electronic thermostatic valve (10) is adjusted as a function of the temperature data signals from the first monitoring means (15c) and the second monitoring means (15d) and of the pressure data signal from the second pressure transducer (29).

7. The thermodynamic system (1) according to any one of the preceding claims, comprising:
- a third heat exchanger (3), connected to the first outlet (U1) of said compressor (2), and to the second inlet (I2) of said compressor (2), said third heat exchanger (3) being configured to allow heat exchange between said heat exchanger fluid and a service fluid, said third heat exchanger (3) comprising an inlet (3c) for said service fluid and an outlet (3d) for the service fluid;
- an electrovalve (16) which is connected to the inlet (3c) for the service fluid entering said heat exchanger (3) and which is activable via said control and drive unit (8) to regulate the flow of the service fluid entering said third heat exchanger (3);
- a temperature sensor (15a) configured to provide said control and drive unit (8) with a temperature data signal representing the temperature of the heat exchanger fluid flowing out from the outlet (3b) of said third heat exchanger (3).

8. The thermodynamic system (1) according to any one of the preceding claims, comprising a dehydrating filter (18) located along the inlet branch (35) between the outlet (4b) of the heat exchanger fluid of the first heat exchanger (4) and the inlet (5a) of the second heat exchanger (5).

9. The thermodynamic system (1) according to one or more of the preceding claims, comprising:
- a hot gas branch (6) for carrying out a hot gas thermodynamic cycle, said hot gas branch (6) being configured to convey the heat exchanger fluid flowing out from the second outlet (U2) of the compressor (2) to the inlet (5a) of said second heat exchanger (5);
- at least one selective closing element (17) operatively associated with the hot gas branch (6) and configured to close and open the branch (6) so as to prevent or allow the flow of heat exchanger fluid inside it;
- a first pressure reducing element (20) operatively associated with the hot gas branch (6) upstream of the selective closing element (17) relative to a flow direction of the heat exchanger fluid;

10. The thermodynamic system (1) according to one or more of the preceding claims, comprising a regenerative heat exchanger (9) configured to define a heat exchanging portion between the heat exchanger fluid flowing along the inlet branch (35) and the heat exchanger fluid flowing along the outlet branch (36).

11. The thermodynamic system (1) according to any one of the preceding claims, wherein said system (1) is, in use, switchable between a heating configuration in which a thermodynamic cycle for heating the first container (11) is implemented, and a cooling configuration in which a thermodynamic cycle for cooling the first container (11) is implemented, or vice versa.

12. The thermodynamic system (1) according to claim 11, wherein in said cooling configuration:
- said at least one selective closing element (17) is closed to prevent the heat exchanger fluid from circulating in the hot gas branch (6);
- said regulating means (7) for regulating the flow rate of the service fluid entering the first heat exchanger (4) are active to allow said service fluid to flow in the first heat exchanger (4);
- said electronic thermostatic valve (10) is active to allow the heat exchanger fluid to flow towards the second heat exchanger (5);
- said bypass valve (13) is active to allow the heat exchanger fluid to flow towards the first inlet (I1) of the compressor (2).

13. The thermodynamic system (1) according to claim 11, wherein in said heating configuration:
- said at least one selective closing element (17) is open to allow the heat exchanger fluid to circulate in the hot gas branch (6);
- said regulating means (7) for regulating the flow rate of the service fluid entering the inlet (4c) of the first heat exchanger (4) are inactive to prevent said service fluid from flowing in the first heat exchanger (4);
- said bypass valve (13) is inactive so that said heat exchanger fluid flows towards the first inlet (11) of the compressor (2) through said bypass branch (12).

14. A machine (30) for making liquid or semi-liquid food products, **characterized in that** it comprises, in combination:
- a processing unit (21) for making a liquid or semi-liquid food type product, comprising at least one first container (11) and a stirrer (23) mounted inside the at least one first container (11) to rotate inside the first container (11);
- a thermodynamic system (1) according to any one of the preceding claims, operatively associated with the processing unit (21), the second heat exchanger (5) being associated with the at least one first container (11) to exchange heat with the product contained in the at least one first container (11).

15. The machine (30) according to claim 14, wherein the machine is a machine for making ice cream and the processing unit (21) is a batch freezing unit.

16. The machine (30) according to claim 14 or 15, wherein said machine is a pasteurizer and said processing unit (21) is a heating and/or cooling unit.
